# FASCICULE DE BREVET EUROPEEN

(11) **EP 3 867 104 B1**
(45) Date de publication et mention de la délivrance du brevet: **23.11.2022**
(21) Numéro de dépôt: 19782968.2
(22) Date de dépôt: 30.09.2019
(51) Int. Cl.: B60R 19/48

(54) **RENFORT DE PARECHOC DESTINÉ À ÊTRE INTÉGRÉ DANS UN BLOC AVANT DE VÉHICULE COMPRENANT UNE PLATINE SUPPORTANT DES CAPTEURS**
ZUR INTEGRATION IN EINE FAHRZEUGFRONTANORDNUNG BESTIMMTE STOSSFÄNGERVERSTÄRKUNG MIT EINER TRÄGERPLATTE MIT SENSOREN
BUMPER REINFORCEMENT INTENDED TO BE INTEGRATED IN A VEHICLE FRONT ASSEMBLY, COMPRISING A MOUNTING PLATE BEARING SENSORS

(30) Priorité: 18.10.2018 FR 1859642
(43) Date de publication de la demande: 25.08.2021
(73) Titulaire: Compagnie Plastic Omnium, 69007 Lyon (FR)
(72) Inventeur: GINJA, Stéphane, 01500 AMBERIEU EN BUGEY (FR)
(74) Mandataire: LLR
(86) Numéro de dépôt international: PCT/EP2019/076453
(87) Numéro de publication internationale: WO 2020/078706

(56) Documents cités:
- EP-A1- 1 457 390
- EP-A1- 3 389 071
- WO-A1-2016/193635
- WO-A1-2019/043262
- DE-U1-202011 001 928
- FR-A1- 3 061 101
- JP-A- 2014 205 473
- US-A1- 2018 093 618

## Description

Renfort de parechoc destiné à être intégré dans un bloc avant de véhicule comprenant une platine supportant des capteurs.

L'invention concerne le domaine des véhicules automobiles. En particulier, l'invention s'intéresse à un module disposé à l'avant d'un véhicule, entre le bloc moteur et le bouclier avant.

On connaît déjà dans l'état de la technique, notamment d'après le document WO 2006/100379, un bloc avant de véhicule comprenant une face avant technique supportant des éléments fonctionnels tels qu'un système de refroidissement, une peau de parechoc ou encore des éléments optiques. Ce bloc avant comprend au moins une poutre transversale supérieure pour transmettre des efforts en cas de choc vers les longerons du véhicule positionnés en arrière dudit bloc avant.

La demande de brevet française n°1758255, non publiée à la date de dépôt de la présente demande, décrit un module monobloc avant pour véhicule automobile comprenant une partie structurelle formée d'une poutre transversale constituant un système d'absorption d'énergie, et une partie semi-structurelle, venue de moulage et surmoulée sur la partie structurelle. La partie semi-structurelle, supporte un ou plusieurs des éléments suivants, tels que les volets pilotés d'entrée d'air destinée à refroidir le radiateur, un guide d'air, un déflecteur sous caisse, un élément optique un chargeur de batterie et/ou une unité de commande électronique et, peut elle-même être liée au bouclier avant formant le parechoc.

Il est également connu, par exemple du document FR3061101, un renfort de parechoc correspondant au préambule de la revendication 1, réalisé par moulage d'un matériau thermoplastique et destiné à être intégré dans un bloc avant pour véhicules automobile entre un parechoc et une partie technique.

Toutefois, cette partie semi-structurelle n'est pas nécessairement surmoulée sur la partie structurelle, et peut être envisagée comme une pièce autonome, encore dénommée renfort de parechoc, et disposée entre le parechoc et la partie technique comprenant, entre autres, les dispositifs de refroidissement moteur.

Le renfort de parechoc est réalisé par moulage d'un matériau thermoplastique.

Le renfort de parechoc est fixé sur les éléments de structure supportant la partie technique, sur la poutre transversale formant la partie structurelle ou directement sur les absorbeurs de choc (crash box). Le renfort de parechoc, qui intègre comme précédemment des éléments techniques déjà cités, permet de réduire le nombre de pièces à assembler en facilitant l'intégration de fonctions multiples sur une même pièce et permet également de renforcer la peau de parechoc en accompagnant la déformation élastique de cette dernière.

On observe toutefois, en raison de l'évolution des véhicules modernes, un besoin croissant d'intégrer des éléments supplémentaires d'aide à la conduite dans la partie avant du véhicule. Les constructeurs cherchent ainsi à loger dans cette partie frontale, relativement exposée aux chocs, une ou plusieurs caméras, des lidars, des détecteurs de proximité, un radar, tous ces capteurs étant reliés à un puissant ordinateur de bord, pour rendre le véhicule de plus en plus autonome.

Ces capteurs présentent toutefois la particularité d'être fragiles et d'avoir un coût de remplacement relativement important en cas de détérioration.

La nature des chocs auxquels le véhicule doit résister, et qui font partie des cahiers des charges s'imposant à tous les constructeurs, est décrite dans des normes connues de la profession.

Ces cahiers des charges envisagent quatre principales catégories d'impacts, à savoir :
- Les chocs de type haute vitesse, qui correspondent à un impact frontal contre un obstacle rigide ou déformable. Pour un choc frontal, la vitesse du véhicule est d'au moins 56 km/h. Le véhicule doit alors être conçu avec un objectif de protection des occupants du véhicule.
- Les chocs de type assurance, à environ 15 km/h contre un mur fixe, tel que celui connu sous le nom de choc Danner ou encore AZT, ou à environ 10km/h contre une barrière déformable ou contre un poteau (RCAR bumper test, chocs poteau, norme IIHS), et qui sont traités avec un objectif de limitation des dégâts et des coûts de réparation associés.
- Les petits chocs, ou chocs de type parking (ECE42, USPART 581), à une vitesse d'environ 4 km/h au centre et 2.5km/h sur les coins, qui sont traités avec un objectif de non détérioration extérieure de la peau de pare-chocs.
- Les chocs piétons réglementaires (jambe, fémur) à environ 40 km/h qui sont traités de manière à respecter des critères bio-mécaniques dans le but de limiter les lésions.

L'invention a pour objet d'offrir une solution permettant de sauvegarder ces capteurs en cas de choc du véhicule entrainant un enfoncement de la partie avant du véhicule tels que les chocs assurance, et dans la mesure du possible, de limiter la détérioration des capteurs en cas de choc à vitesse plus importante.

A cet effet, l'invention concerne un renfort de parechoc destiné à être intégré dans un bloc avant pour véhicule automobile entre le parechoc et la partie technique..

Ce renfort de parechoc se caractérise en ce qu'il comprend au moins une platine destinée à supporter au moins un capteur, venue de matière avec ledit renfort de parechoc et liée par son périmètre à ce dernier par l'intermédiaire d'un pont de matière fragile de sorte que, en cas de choc frontal engendrant la déformation du renfort de parechoc et impactant la platine, la platine se détache en tout ou partie du renfort de parechoc sous l'effet de la rupture du pont de matière.

Le mouvement du renfort de parechoc est dissocié du mouvement des éléments structurel du bloc avant. En se détachant du renfort de parechoc, la platine supportant les capteurs vient alors se placer en arrière de la partie structurelle, de sorte que les capteurs bénéficient de la protection offerte par la poutre formant la partie structurelle qui absorbe une partie de l'énergie du choc en se déformant.

En cas de choc de faible importance, tel qu'un choc parking ou un choc piéton, la platine qui est située en dehors de la zone d'impact n'est pas affectée et la disposition et l'orientation des capteurs ne sont pas modifiées.

En raison de sa configuration, la platine ne crée pas de point dur susceptible de blesser la jambe d'un piéton.

La pièce monobloc selon l'invention peut également comprendre les caractéristiques suivantes prises seules ou en combinaison :
- Le pont de matière est formé par une alternance d'au moins une première zone dans laquelle le pont de matière a une épaisseur inférieure ou égale à l'épaisseur de la paroi de la platine et supérieure ou égale à une épaisseur intermédiaire strictement inférieure à l'épaisseur de la paroi de ladite platine, et d'au moins une deuxième zone dans laquelle le pont de matière a une épaisseur inférieure ou égale à l'épaisseur intermédiaire et supérieure ou égale à une épaisseur nulle.
- L'épaisseur intermédiaire est comprise entre 0,3 mm et 0,8 mm.
- L'épaisseur de la paroi de la platine est comprise entre 2 mm et 5 mm.
- L'épaisseur de la paroi de la platine est sensiblement égale à l'épaisseur de la paroi du renfort de parechoc.
- Le pont de matière comprend au moins une première zone charnière dans laquelle l'épaisseur du pont de matière est égale à l'épaisseur de la paroi de la platine, de sorte que, en cas de rupture du pont de matière, la platine reste liée au renfort de parechoc par ladite première zone charnière et ne tombe pas au sol.
- Le pont de matière comprend une première zone charnière unique et une deuxième zone s'étendant sur le reste du périmètre de la platine.
- Les premières zones et les deuxièmes zones s'étendent sur des longueurs sensiblement égales.
- Le pont de matière s'étend dans le plan de la platine.
- Le pont de matière s'étend selon une direction perpendiculaire au plan de la platine.
- Une face arrière de la platine est coplanaire d'une face avant du renfort de parechoc.
- Le renfort de parechoc est formé préférentiellement par moulage d'un matériau choisi parmi les matériaux suivants : le polypropylène (PP), le polyéthylène (PE), le polyamide (PA), le polycarbonate (PC), le polytéréphtalate de butylène (PC-PBT).
- Le matériau du renfort de parechoc est préférentiellement renforcé par des charges minérales ou par des fibres de verre ou de carbone.
- Le pont de matière est ajusté pour que la platine se détache du renfort de parechoc lorsque le véhicule roule à 15km/h et subit un choc frontal contre un mur fixe.
- Le pont de matière est ajusté pour que la platine se détache du renfort de parechoc lorsque le véhicule roule à 10km/h et subit un choc frontal contre un poteau fixe ou une barrière déformable.
- Une platine supporte au moins un capteur choisi parmi les capteurs suivants : un lidar, un radar ou une caméra d'aide au stationnement, une caméra de vision nocturne, un radar de régulation de distance, un capteur de proximité d'assistance au stationnement.
- La platine supporte un ou plusieurs pions de protection s'élevant perpendiculairement depuis la face avant de la platine en direction de l'avant du véhicule sur une hauteur supérieure à la hauteur du capteur adjacent le plus proche.
- le renfort de parechoc est apte à supporter des dispositifs d'admission d'air, une peau de parechoc, un guide d'air, un élément optique, un chargeur de batterie et/ou une unité de commande électronique.
- Le renfort de parechoc est apte à supporter des dispositifs d'admission d'air, une peau de parechoc, un élément optique.
- Le renfort de parechoc est surmoulé sur une partie structurelle comprenant au moins l'un des éléments suivants : une poutre choc, un absorbeur de choc, un guide d'air, un système de protection choc piéton.

### Brève description des figures

L'invention sera mieux comprise à la lecture de la description qui va suivre donnée uniquement à titre d'exemple et faite en se référant aux dessins annexés dans lesquels :
- La figure 1 représente une vue générale en perspective d'une partie avant de véhicule comprenant un renfort de parechoc selon l'invention.
- La figure 2 représente une vue générale d'un renfort de parechoc.
- La figure 3 représente une première alternative de réalisation de la platine.
- La figure 4 représente une seconde alternative de réalisation de la platine.
- Les figures 5 à 9 représentent des vues de détail de différentes combinaisons de réalisation du pont de matière selon l'invention.

### Description détaillée

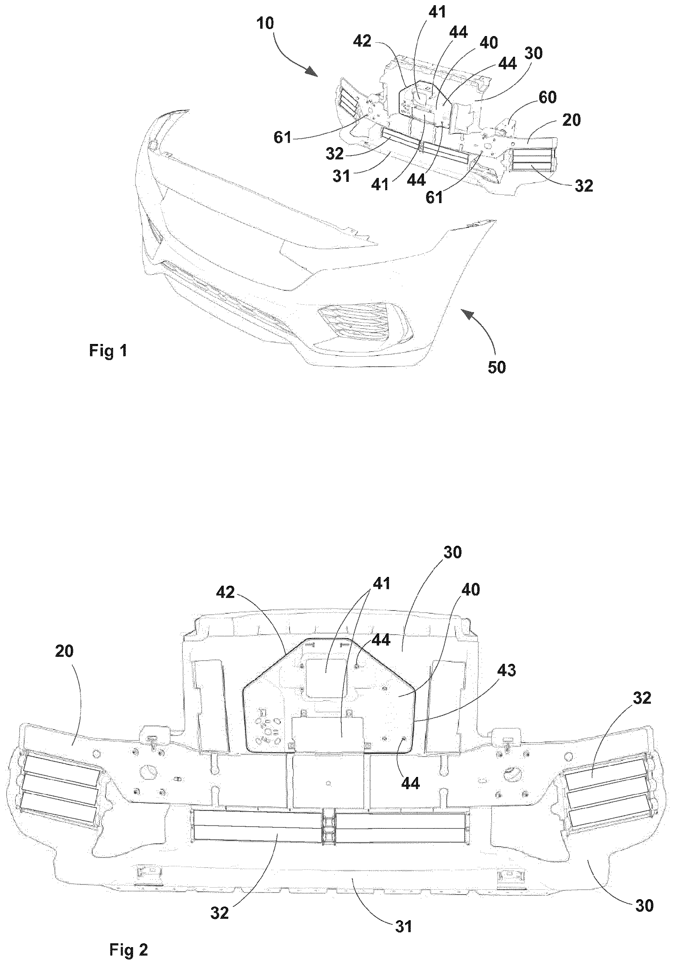

La figure 1 représente les pièces composant le bloc avant comprenant un parechoc 50, monté sur un renfort de parechoc 30, lui-même fixé par des éléments de fixation 61, par exemple par boulonnage ou par rivetage, sur les montants longitudinaux du véhicule par l'intermédiaire d'un boitier 60, déformable en cas de choc (crash box).

Il est également possible de prévoir le cas dans lequel le renfort de parechoc 30 est surmoulé sur une partie structurelle 20 formée ici d'un barreau de poutre rigide en acier ou en aluminium. On obtient alors une pièce monobloc 10, elle-même fixée sur le boitier déformable 60 du véhicule (crash box). Cette partie structurelle 20 comprend en général une poutre choc, et peut supporter un guide d'air, un système de protection choc piéton, un chargeur batterie ou encore une unité de commande électronique (ECU).

La figure 2 illustre en vue frontale depuis l'avant du véhicule le renfort de parechoc 30 faisant l'objet de l'invention.

Ce renfort de parechoc 30 est constitué d'un matériau, préférentiellement thermoplastique et facilement moulable par injection, tel que le polypropylène (PP), le polyéthylène (PE), le polyamide (PA), le polycarbonate (PC), ou encore le polytéréphtalate de butylène (PC-PBT).

Pour des raisons de résistance, le matériau formant le renfort de parechoc 30 peut contenir une charge de matière minérale telle que du talc, ou des fibres de renfort en verre ou en carbone.

Le voile de matière formant le renfort de parechoc a une épaisseur dépendant de la nature et de la résistance du matériau, généralement comprise entre 2mm et 5mm, et communément de l'ordre de 3mm. Ce renfort de parechoc est conçu pour résister aux conditions climatiques extérieures rencontrées par le véhicule et aux agressions telles que l'ensoleillement ou l'humidité.

Le renfort de parechoc 30 est également conçu pour supporter des équipements déjà cités, tels que des dispositifs d'admission d'air, ici des volets mobiles 32, une peau de parechoc 50, ou encore un ou plusieurs éléments optiques (non représentés).

Le renfort de parechoc 30 comprend, dans sa partie centrale supérieure, une platine 40 destinée à recevoir un ou plusieurs capteurs 41 tel que ceux énoncés ci-dessus, à savoir un lidar, un capteur de proximité, un radar ou une caméra d'aide au stationnement, une caméra de vision nocturne, une caméra 3D ou encore un radar de régulation de distance.

La platine 40 est venue de matière et moulée en même temps que le renfort de parechoc 30. L'épaisseur eₚ de la paroi de la platine 40 est sensiblement égale à l'épaisseur de la paroi du renfort de parechoc 30 proprement dite.

On observera ici que le renfort de parechoc servant de support à la présente description comporte une platine unique 40 recevant l'ensemble des capteurs 41, mais il n'est pas exclu, tout en restant dans le cadre de l'invention, de disposer plusieurs platines, supportant chacune au moins un capteur 41, à des endroits judicieusement choisis du renfort de parechoc 30.

La platine 40 est reliée au renfort de parechoc par un pont de matière 43 circulant sur tout le périmètre 42 de la platine 40.

Ce pont de matière 43, qualifié à cet effet de fragile, est conçu pour se briser en cas de choc frontal engendrant la déformation du renfort de parechoc 30 et impactant la platine 40, de sorte que la platine 40 se détache en tout ou partie du renfort de parechoc 30. En d'autres termes, la rupture du pont de matière intervient avant la rupture de la matière formant le reste du renfort de parechoc.

Bien évidemment, en conditions normales d'utilisation du véhicule, la platine 40 doit être suffisamment rigide pour soutenir les capteurs et assurer leur bonne orientation et leur bon positionnement géométrique. La platine doit donc résister aux vibrations et aux accélérations subies par le véhicule, en particulier lorsque ce dernier roule sur une chaussée dégradée. De la même manière, le pont de matière 43, qui relie la platine 40 au renfort de parechoc 30 doit être suffisamment solide pour éviter que la platine 40 ne se détache de manière non désirée du renfort de parechoc 30.

Le pont de matière 43 présente donc une épaisseur généralement plus faible que l'épaisseur de la paroi du renfort de parechoc 30 ou que l'épaisseur eₚ de la paroi de la platine 40.

En pratique, le pont de matière est formé par une alternance d'au moins une première zone Z₁ dans laquelle le pont de matière 43 a une épaisseur e₁ inférieure ou égale à l'épaisseur eₚ de la paroi de la platine 40 et supérieure ou égale à une épaisseur intermédiaire eᵢ strictement inférieure à l'épaisseur eₚ de la paroi de la platine (*eᵢ* ≤ *e*₁ ≤ *eₚ*)*,* et d'au moins une deuxième zone Z₂ dans laquelle le pont de matière 43 a une épaisseur e₂ inférieure ou égale à l'épaisseur intermédiaire eᵢ et supérieure ou égale à une épaisseur nulle (0 ≤ *e*₂ ≤ *eᵢ*).

On va donc chercher à ajuster les épaisseurs e₁ et e₂ pour faire en sorte que la platine 40 se détache du renfort de parechoc 30 en cas de choc de type assurance à environ 15 km/h contre un mur fixe, tel que celui connu sous le nom de Danner ou AZT, ou encore pour un choc à environ 10 km/h contre une barrière déformable ou contre un poteau (RCAR bumper test, chocs poteau, norme IIHS).

En pratique, pour les matériaux formant le renfort de parechoc, l'épaisseur intermédiaire eᵢ, est comprise entre 0,3mm et 0,8mm, (0,3*mm* ≤ *eᵢ* ≤ 0,8*mm*).

Cette définition permet une multitude de formes de réalisations différentes ayant toutes pour objectif de rendre ledit pont de matière 43 fragile.

Une première forme de réalisation du pont de matière consiste à réaliser un pont de matière comprenant une première zone Z₁ d'épaisseur eᵢ, et une deuxième zone Z₂ également d'épaisseur eᵢ. En d'autres termes, l'épaisseur du pont de matière 43 est constante sur tout le périmètre 42 de la platine 40 (*e*₁ = *e*₂ = *eᵢ*). L'épaisseur eᵢ correspond ainsi sensiblement à l'épaisseur maximum de matière au-delà de laquelle un pont de matière continue ne satisfait plus aux exigences de déchirabilité évoquées ci-dessus.

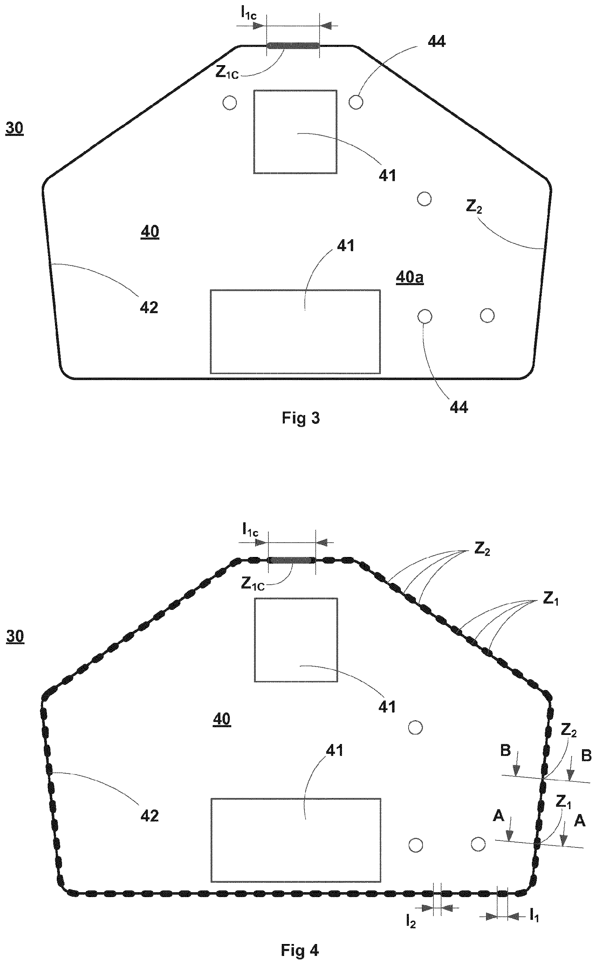

Toutefois, en référence à la figure 3, il peut s'avérer intéressant de prévoir au moins une première zone Z₁ présentant un pont de matière dont l'épaisseur e₁ est sensiblement égale à l'épaisseur eₚ de la platine. En effet, il a été observé pendant les tests que la platine, après s'être détachée du renfort de parechoc 30 pouvait tomber sur le sol et provoquer une détérioration involontaire des capteurs. Cette première zone particulière Z_{1C}, joue alors le rôle d'une charnière qui n'est pas destinée à se rompre et qui maintient la platine 40 sur le renfort de parechoc 30, tout en lui permettant de pivoter autour de cet axe dans la direction longitudinale.

L'emplacement et la longueur I_{1c}, le long du périmètre 42 de la platine 40, de cette première zone charnière Z_{1C}, est laissée au choix du concepteur en fonction de la configuration de la platine et des équipements formant son environnement immédiat.

La figure 4 illustre un cas plus général, dans lequel des premières zones Z₁ de plus forte épaisseur e₁ alternent régulièrement avec des deuxièmes zones Z₂ de moindre épaisseur e₂.

Les premières et les deuxièmes zones Z₁ et Z₂ ont des longueurs I₁ et I₂ sensiblement égales, le long du périmètre 42 de la platine 40. On obtient ainsi un pont de matière 43 déchirable « en pointillé ».

A titre d'exemple, des essais ont été réalisés avec succès pour une platine d'épaisseur eₚ de 3mm, comportant un pont de matière formé de premières zones Z₁ de longueur I₁ égales 15 mm et égales à la longueur I₂ des deuxièmes zones Z₂. L'épaisseur e₁ du pont de matière 43 dans les premières zones Z₁ est de 1,5mm, et l'épaisseur e₂ du pont de matière 43 dans les deuxièmes zones Z₂ est de 0,3mm.

Bien évidemment, il est également possible de prévoir une zone charnière formée de plusieurs premières zones Z_{1C} juxtaposées d'épaisseur e₁ égale à l'épaisseur eₚ de la platine 40, intercalées avec des deuxièmes zones Z₂ de faible épaisseur e₂, ou une seule première zone charnière Z_{1C} de longueur I_{1c} adaptée, comme cela est représenté à la figure 4.

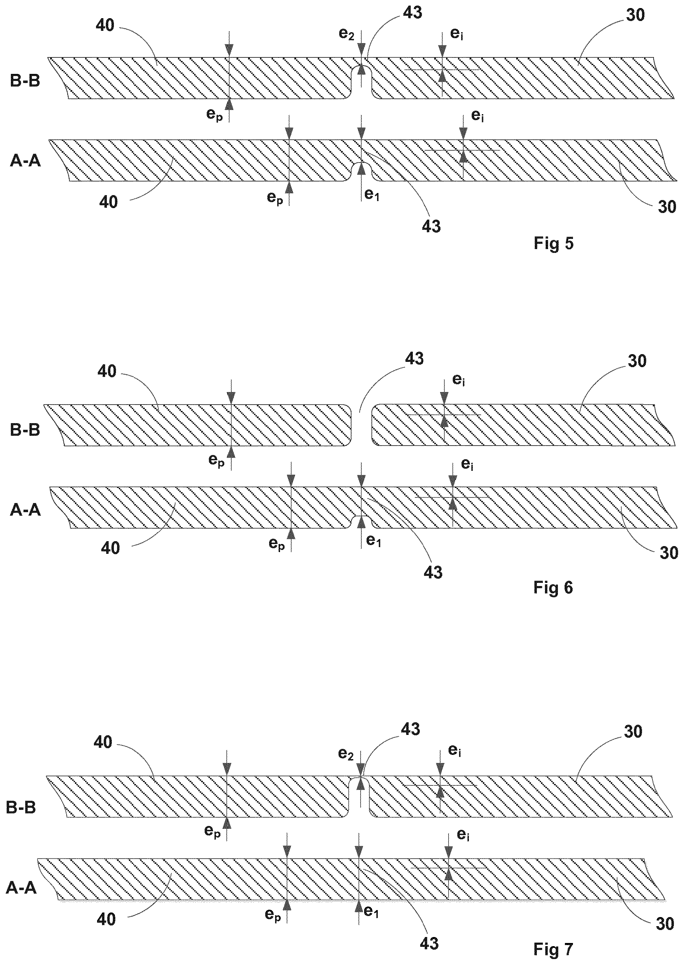

Les figures 5 à 9 permettent d'illustrer, à titre d'exemples, des variations possibles de réalisation du pont de matière 43.

La coupe selon A-A représente une coupe du pont de matière 43 au niveau d'une première zone Z₁, et la coupe droite selon B-B représente la coupe du pont de matière 43 au niveau d'une deuxième zone Z₂.

La figure 5 illustre le cas dans lequel l'épaisseur e₁ du pont de matière au niveau de la première zone Z₁ est supérieure à la valeur eᵢ et inférieure à la valeur de l'épaisseur eₚ de platine. L'épaisseur e₂ du pont de matière au niveau de la deuxième zone Z₂ est inférieure à eᵢ mais n'est pas nulle. Ce cas illustre les valeurs chiffrées données à titre d'exemple dans un paragraphe antérieur.

La figure 6 illustre le cas dans lequel l'épaisseur e₁ du pont de matière 43 dans la première zone Z₁ est supérieure à eᵢ et inférieure à eₚ et dans lequel l'épaisseur e₂ du pont de matière dans la deuxième zone Z₂ est nulle.

Pour des raisons de faisabilité et de moulabilité il peut s'avérer utile de prévoir une deuxième zone Z₂ dans laquelle l'épaisseur e₂ du pont de matière 43 est très faible, sans être totalement nulle, comme cela est illustré à la figure 7.

On observe alors, de manière logique que, plus l'épaisseur e₂ du pont de matière 43 dans la deuxième zone Z₂ est faible, plus l'épaisseur e₁ du pont de matière 43 dans la première zone Z₁ est importante, jusqu'à être égale à l'épaisseur eₚ comme cela est illustré à la figure 7.

Le pont de matière illustré aux figures 5 à 7 prévoit que ce dernier s'étend dans un plan sensiblement parallèle aux plans de la platine 40 ou du renfort de parechoc 30.

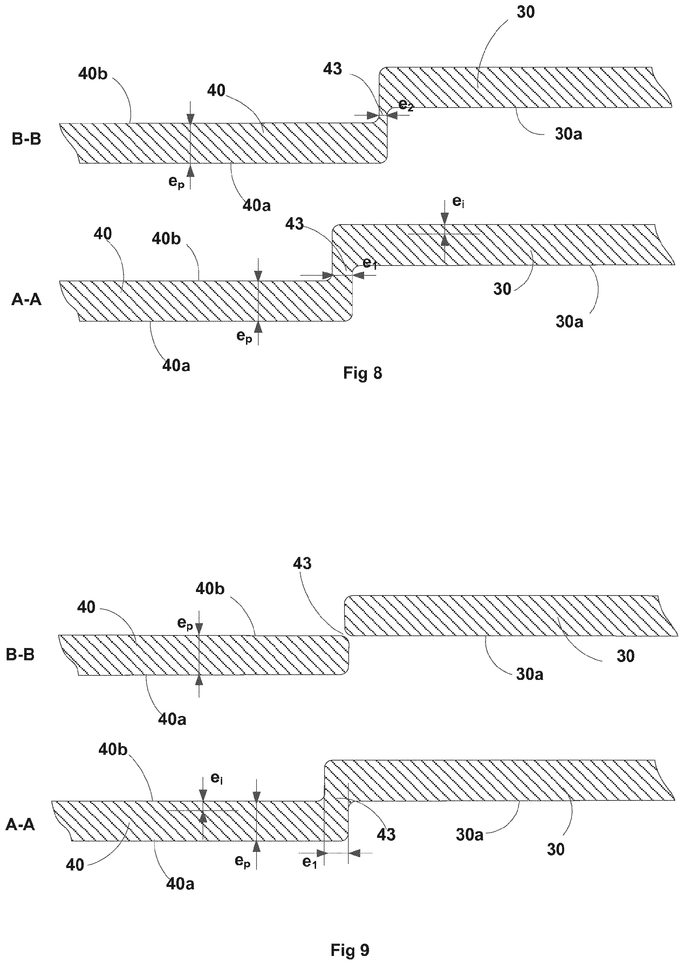

Une forme de réalisation alternative peut également prévoir, pour favoriser en particulier le détachement de la platine en cas de choc transversal, que le pont de matière 43 s'étend selon une direction sensiblement perpendiculaire au plan de la platine 40, comme cela est illustré aux figures 8 et 9.

Une face avant de la platine 40 est indiquée sous le repère 40a et une face arrière de la platine sous le repère 40b. Une face avant du renfort de parechoc 30 est repérée 30a.

La figure 8 illustre le cas dans lequel le pont de matière 43 a une épaisseur e₁ dans la première zone Z₁ inférieure à l'épaisseur eₚ de la platine et supérieure à l'épaisseur intermédiaire eᵢ dont les valeurs limites restent inchangées, et une épaisseur e₂ dans la deuxième zone Z₂ inférieure à l'épaisseur intermédiaire eᵢ et non nulle.

Dans une direction longitudinale XX' allant de l'avant à l'arrière du véhicule, on observe que la face arrière 40b de la platine 40 est disposée en avant de la face avant 30a du renfort de parechoc 30.

Toujours dans le même objectif, la figure 9 illustre un cas particulier du cas exposé à la figure 8 dans lequel la face arrière 40b de la platine 40 est coplanaire de la face avant 30b du renfort de parechoc 30 .

La figure 9 illustre également le cas dans lequel l'épaisseur e₂ du pont de matière 43 dans la deuxième zone Z₂ est nulle.

Ainsi, il est notamment tout à fait possible de réaliser des premières zones Z₁ présentant un pont de matière d'épaisseurs e₁ différentes selon la localisation de la première zone Z₁ sur le périmètre 42 de la platine 40. De même l'épaisseur e₂ du pont de matière dans les deuxièmes zones Z₂ pourra également varier selon le besoin.

Un autre perfectionnement de l'invention consiste à positionner un pion de protection 44, tel qu'illustré dans les figures 1 à 3, ou encore un voile, orienté vers l'avant du véhicule selon la direction longitudinale et s'élevant perpendiculairement par rapport au plan de la platine 40, de manière à constituer un point de premier contact servant à encaisser le premier choc entrainant la rupture du pont de matière 43 ainsi qu'à protéger un capteur situé à proximité. La hauteur du pion de protection ou du voile, mesurée depuis la face avant 40a de la platine, est alors supérieure à la hauteur du capteur 41 le plus proche dudit pion de protection 44. De manière alternative, ce pion de protection pourra être remplacé, lorsque cela est possible, par un boitier rigide dans lequel est enfermé le capteur 41.

### NOMENCLATURE

- 10: Pièce monobloc formant un bloc avant.
- 20: Partie structurelle de la pièce monobloc/Barreau de poutre choc.
- 30: Renfort de parechoc.
- 30a: Face avant du renfort de parechoc.
- 31: Système de protection choc piéton.
- 32: Dispositif d'admission d'air/Volets pilotés.
- 40: Platine
- 40a: Face avant de la platine.
- 40b: Face arrière de la platine.
- 41: Capteur.
- 42: Périmètre de la platine/ pont de matière fragile.
- 43: Pont de matière.
- 44: Pion de protection.
- Z₁: Première zone.
- Z_{1C}: Première zone charnière.
- Z₂: Deuxième zone.
- I₁: Longueur de la première zone.
- I_{1c}: Longueur de la première zone charnière.
- I₂: Longueur de la seconde zone.
- e₁: Epaisseur du pont de matière dans une première zone.
- e₂: Epaisseur du pont de matière dans une deuxième zone.
- eᵢ: Epaisseur intermédiaire.
- eₚ: Epaisseur de la platine.
- A-A: Coupe du pont de matière au droit d'une première zone.
- B-B: Coupe du pont de matière au droit d'une deuxième zone.
- 50: Peau de parechoc avant.
- 60: Crash box.
- 61: Eléments de fixation.

## Revendications

1. Renfort de parechoc (30) réalisé par moulage d'un matériau thermoplastique et destiné à être intégré dans un bloc avant pour véhicule automobile entre un parechoc et une partie technique renfort de parechoc (30) comprenant au moins un capteur (41), **caractérisé en ce que** le renfort de parechoc (30) comprend au moins une platine (40) destinée à supporter l'au moins un capteur (41), venue de matière avec ledit renfort de parechoc (30) et liée par son périmètre (42) à ce dernier par l'intermédiaire d'un pont de matière fragile (43) de sorte que, en cas de choc frontal engendrant la déformation du renfort de parechoc (30) et impactant la platine (40), la platine (40) se détache en tout ou partie du renfort de parechoc (30) sous l'effet de la rupture du pont de matière (43).

2. Renfort de parechoc (30)selon la revendication 1 dans laquelle le pont de matière (43) est formé par une alternance d'au moins une première zone (Z₁) dans laquelle le pont de matière (43) a une épaisseur (e₁) inférieure ou égale à l'épaisseur (eₚ) de la paroi de la platine (40) et supérieure ou égale à une épaisseur intermédiaire (eᵢ), strictement inférieure à l'épaisseur (eₚ) de la paroi de ladite platine (*eᵢ* ≤ *e*₁ ≤ *eₚ*)*,* et d'au moins une deuxième zone (Z₂) dans laquelle le pont de matière (43) a une épaisseur (e₂) inférieure ou égale à l'épaisseur intermédiaire (eᵢ) et supérieure ou égale à une épaisseur nulle (0 ≤ *e*₂ ≤ *eᵢ*).

3. Renfort de parechoc (30) selon la revendication 2, dans lequel l'épaisseur intermédiaire (eᵢ) est comprise entre 0,3mm et 0,8mm.

4. Renfort de parechoc (30) selon la revendication 2 ou la revendication 3, dans lequel l'épaisseur (eₚ) de la paroi de la platine (40) est comprise entre 2 et 5 mm.

5. Renfort de parechoc (30) selon la revendication 4, dans lequel l'épaisseur (eₚ) de la paroi de la platine (40) est sensiblement égale à l'épaisseur de la paroi du renfort de parechoc (30).

6. Renfort de parechoc (30) selon l'une quelconque des revendications 2 à 5, dans lequel le pont de matière (43) comprend au moins une première zone charnière (Z_{1c}) dans laquelle l'épaisseur du pont de matière (43) est égale à l'épaisseur (eₚ) de la paroi de la platine (40), de sorte que, en cas de rupture du pont de matière, la platine (40) reste liée au renfort de parechoc (40) par ladite première zone charnière (Z_{1c}) et ne tombe pas au sol.

7. Renfort de parechoc (30) selon la revendication 6 dans lequel le pont de matière (43) comprend une première zone charnière (Z_{1c}) unique et une deuxième zone (Z₂) s'étendant sur le reste du périmètre (42) de la platine (40).

8. Renfort de parechoc (30) selon l'une quelconque des revendications 2 à 7, dans lequel les premières zones (Z₁) et les deuxièmes zones Z₂) s'étendent sur des longueurs sensiblement égales.

9. Renfort de parechoc (30) selon l'une quelconque des revendications 1 à 8, dans lequel le pont de matière (43) s'étend dans le plan de la platine (40).

10. Renfort de parechoc (30) selon l'une quelconque des revendications 1 à 8, dans lequel le pont de matière (43) s'étend selon une direction perpendiculaire au plan de la platine (40).

11. Renfort de parechoc (30) selon la revendication 10, dans lequel une face arrière (40b) de la platine (40) est coplanaire d'une face avant (30a) du renfort de parechoc (30).

12. Renfort de parechoc (30) selon l'une quelconque des revendications précédentes, dans lequel ledit renfort de parechoc (30) est formé préférentiellement par moulage d'un matériau choisi parmi les matériaux suivants : le polypropylène (PP), le polyéthylène (PE), le polyamide (PA), le polycarbonate (PC), le polytéréphtalate de butylène (PC-PBT).

13. Renfort de parechoc (30) selon la revendication 12, dans lequel le matériau formant le renfort de parechoc (30) est renforcé préférentiellement par des charges minérales ou par des fibres de verre ou de carbone.

14. Renfort de parechoc (30) selon l'une quelconque des revendications précédentes, dans lequel le pont de matière (43) est ajusté pour que la platine (40) se détache dudit renfort de parechoc (30) lorsque le véhicule roule à 15km/h et subit un choc frontal contre un mur fixe.

15. Renfort de parechoc (30) selon l'une quelconque des revendications précédentes, dans lequel le pont de matière (43) est ajusté pour que la platine (40) se détache dudit renfort de parechoc (30) lorsque le véhicule roule à 10km/h et subit un choc frontal contre un poteau fixe ou une barrière déformable.

16. Renfort de parechoc (30) selon l'une quelconque des revendications précédentes dans lequel une platine (40) supporte au moins un capteur choisi parmi les capteurs (41) suivants : un lidar, un radar ou une caméra d'aide au stationnement, une caméra de vision nocturne, un radar de régulation de distance, un capteur de proximité d'assistance au stationnement.

17. Renfort de parechoc (30) selon l'une quelconque des revendications précédentes dans lequel la platine (40) supporte un ou plusieurs pions de protection (44) s'élevant perpendiculairement depuis la face avant (40a) de la platine (40) en direction de l'avant du véhicule sur une hauteur supérieure à la hauteur du capteur (41) adjacent le plus proche.

18. Renfort de parechoc (30) selon l'une quelconque des revendications précédentes dans lequel ledit renfort de parechoc (30) est apte à supporter, des dispositifs d'admission d'air (32), une peau de parechoc (50), un guide d'air, un élément optique un chargeur de batterie et/ou une unité de commande électronique.

19. Renfort de parechoc (30) selon l'une quelconque des revendications précédentes surmoulé sur une partie structurelle (20) comprenant au moins l'un des éléments suivants : une poutre choc, un absorbeur de choc, un système de protection choc piéton (31).

## Patentansprüche

1. Stoßstangenverstärkung (30), die durch Formen eines thermoplastischen Materials hergestellt wird und dazu bestimmt ist, in einen Vorderblock für ein Kraftfahrzeug zwischen einer Stoßstange und einem technischen Teil integriert zu werden, wobei die Stoßstangenverstärkung (30) mindestens einen Sensor (41) aufweist, **dadurch gekennzeichnet, dass** die Stoßstangenverstärkung (30) mindestens eine Platine (40) aufweist, die dazu bestimmt ist, den mindestens einen Sensor (41) zu tragen, wobei die Platine (40) aus dem gleichen Material Stoßstangenverstärkung (30) gefertigt ist und an ihrem Umfang (42) über eine zerbrechliche Materialbrücke (43) mit dieser verbunden ist, so dass sich die Platine (40) im Falle eines Frontalaufpralls, der die Verformung der Stoßstangenverstärkung (30) bewirkt und auf die Platine (40) trifft, unter der Wirkung des Bruchs der Materialbrücke (43) ganz oder teilweise von der Stoßstangenverstärkung (30) löst.

2. Stoßstangenverstärkung (30) nach Anspruch 1, bei der die Materialbrücke (43) abwechselnd aus mindestens einer ersten Zone (Z₁) gebildet wird, in der die Materialbrücke (43) eine Dicke (e₁) aufweist, die kleiner oder gleich der Dicke (eₚ) der Wand der Platine (40) und größer oder gleich einer Zwischendicke (eᵢ) ist, strikt kleiner als die Dicke (eₚ) der Wand der Platine (*eᵢ*≤ *e₁* ≤ *eₚ*) ist, und mindestens einer zweiten Zone (Z₂), in der die Materialbrücke (43) eine Dicke (e₂) aufweist, die kleiner oder gleich der Zwischendicke (eᵢ) und größer oder gleich einer Nulldicke (0 ≤ *e₂* ≤ *eᵢ*) ist.

3. Stoßstangenverstärkung (30) nach Anspruch 2, wobei die Zwischendicke (eᵢ) zwischen 0,3 mm und 0,8 mm liegt.

4. Stoßstangenverstärkung (30) nach Anspruch 2 oder 3, wobei die Dicke (eₚ) der Wand der Platine (40) zwischen 2 und 5 mm beträgt.

5. Stoßstangenverstärkung (30) nach Anspruch 4, wobei die Dicke (eₚ) der Wand der Platine (40) im Wesentlichen gleich der Dicke der Wand der Stoßstangenverstärkung (30) ist.

6. Stoßstangenverstärkung (30) nach einem der Ansprüche 2 bis 5, wobei die Materialbrücke (43) mindestens einen ersten Gelenkbereich (Z_{1C}) aufweist, in dem die Dicke der Materialbrücke (43) gleich der Dicke (eₚ) der Wand der Platine (40) ist, so dass bei einem Bruch der Materialbrücke die Platine (40) über den ersten Gelenkbereich (Z_{1C}) mit der Stoßstangenverstärkung (40) verbunden bleibt und nicht auf den Boden fällt.

7. Stoßstangenverstärkung (30) nach Anspruch 6, bei der die Materialbrücke (43) einen einzelnen ersten Scharnierbereich (Z_{1C}) und einen zweiten Bereich (Z₂) aufweist, der sich über den restlichen Umfang (42) der Platine (40) erstreckt.

8. Stoßstangenverstärkung (30) nach einem der Ansprüche 2 bis 7, wobei sich die ersten Bereiche (Z₁) und die zweiten Bereiche (Z₂) über im Wesentlichen gleiche Längen erstrecken.

9. Stoßstangenverstärkung (30) nach einem der Ansprüche 1 bis 8, wobei sich die Materialbrücke (43) in der Ebene der Platine (40) erstreckt.

10. Stoßstangenverstärkung (30) nach einem der Ansprüche 1 bis 8, wobei sich die Materialbrücke (43) in einer Richtung senkrecht zur Ebene der Platine (40) erstreckt.

11. Stoßstangenverstärkung (30) nach Anspruch 10, wobei eine hintere Fläche (40b) der Platine (40) koplanar zu einer vorderen Fläche (30a) der Stoßstangenverstärkung (30) ist.

12. Stoßstangenverstärkung (30) nach einem der vorhergehenden Ansprüche, wobei die Stoßstangenverstärkung (30) vorzugsweise durch Formen eines Materials gebildet wird, das aus den folgenden Materialien ausgewählt ist: Polypropylen (PP), Polyethylen (PE), Polyamid (PA), Polycarbonat (PC), Polybutylenterephthalat (PC-PBT).

13. Stoßstangenverstärkung (30) nach Anspruch 12, wobei das Material, das die Stoßstangenverstärkung (30) bildet, vorzugsweise durch mineralische Füllstoffe oder durch Glas- oder Kohlenstofffasern verstärkt ist.

14. Stoßstangenverstärkung (30) nach einem der vorhergehenden Ansprüche, wobei die Materialbrücke (43) so angepasst ist, dass sich die Platine (40) von der Stoßstangenverstärkung (30) löst, wenn das Fahrzeug mit 15 km/h fährt und einen Frontalaufprall gegen eine feste Wand erleidet.

15. Stoßstangenverstärkung (30) nach einem der vorhergehenden Ansprüche, wobei die Materialbrücke (43) so angepasst ist, dass sich die Platine (40) von der Stoßstangenverstärkung (30) löst, wenn das Fahrzeug mit 10 km/h fährt und einen Frontalaufprall gegen einen festen Pfosten oder eine deformierbare Barriere erleidet.

16. Stoßstangenverstärkung (30) nach einem der vorhergehenden Ansprüche, bei der eine Platine (40) mindestens einen Sensor trägt, der aus den folgenden Sensoren (41) ausgewählt ist: ein Lidar, ein Radar oder eine Kamera für die Einparkhilfe, eine Nachtsichtkamera, ein Radar für die Abstandsregelung, ein Näherungssensor für die Einparkhilfe.

17. Stoßstangenverstärkung (30) nach einem der vorhergehenden Ansprüche, bei der die Platine (40) einen oder mehrere Schutzstifte (44) trägt, die senkrecht von der Vorderseite (40a) der Platine (40) in Richtung der Vorderseite des Fahrzeugs um eine Höhe ansteigen, die größer ist als die Höhe des nächstgelegenen benachbarten Sensors (41).

18. Stoßstangenverstärkung (30) nach einem der vorhergehenden Ansprüche, wobei die Stoßstangenverstärkung (30) eingerichtet ist, Luftansaugvorrichtungen (32), eine Stoßstangenhaut (50), eine Luftführung, ein optisches Element, ein Batterieladegerät und/oder eine elektronische Steuereinheit zu tragen.

19. Stoßstangenverstärkung (30) nach einem der vorhergehenden Ansprüche, die auf ein Strukturteil (20) aufgeformt ist, das mindestens eines der folgenden Elemente aufweist: einen Aufprallträger, einen Aufprallabsorber, ein Fußgänger-Aufprallschutzsystem (31).

## Claims

1. Bumper reinforcement (30) that is produced by molding a thermoplastic material and intended to be integrated into a front assembly for a motor vehicle between a bumper and a technical part, the bumper reinforcement (30) comprising at least one sensor (41), **characterized in that** the bumper reinforcement (30) comprised at least one mounting plate (40) that is intended to support the at least one sensor (41), is integral with said bumper reinforcement (30), and is linked by its perimeter (42) to the latter via a fragile material bridge (43) such that, in the event of a frontal crash that results in deformation of the bumper reinforcement (30) and impacts the mounting plate (40), the mounting plate (40) detaches fully or partially from the bumper reinforcement (30) under the effect of the rupture of the material bridge (43).

2. Bumper reinforcement (30) according to claim 1, wherein the material bridge (43) is formed by an alternation of at least one first zone (Zi), in which the material bridge (43) has a thickness (e₁) that is less than or equal to the thickness (eₚ) of the wall of the mounting plate (40) and greater than or equal to an intermediate thickness (eᵢ) that is strictly less than the thickness (eₚ) of the wall of said mounting plate (*eᵢ* ≤ *e₁* ≤ *eₚ*)*,* and at least one second zone (Z₂) in which the material bridge (43) has a thickness (e₂) that is less than or equal to the intermediate thickness (eᵢ) and greater than or equal to zero thickness (0 ≤ *e*₂ ≤ *eᵢ*).

3. Bumper reinforcement (30) according to claim 2, wherein the intermediate thickness (eᵢ) is between 0.3 mm and 0.8 mm.

4. Bumper reinforcement (30) according to claim 2 or claim 3, wherein the thickness (eₚ) of the wall of the mounting plate (40) is between 2 and 5 mm.

5. Bumper reinforcement (30) according to claim 4, wherein the thickness (eₚ) of the wall of the mounting plate (40) is substantially equal to the thickness of the wall of the bumper reinforcement (30).

6. Bumper reinforcement (30) according to any one of claims 2 to 5, wherein the material bridge (43) comprises at least one first hinge zone (Z_{1c}) in which the thickness of the material bridge (43) is equal to the thickness (eₚ) of the wall of the mounting plate (40), so that, in the event of a rupturing of the material bridge, the mounting plate (40) remains joined with the bumper reinforcement (40) by said first zone hinge (Z_{1c}) and does not fall to the ground.

7. Bumper reinforcement (30) according to claim 6, wherein the material bridge (43) comprises a single first hinge zone (Z_{1c}) and a second zone (Z₂) extending over the rest of the perimeter (42) of the mounting plate (40).

8. Bumper reinforcement (30) according to any one of claims 2 to 7, wherein the first zones (Z₁) and the second zones Z₂) extend over substantially equal lengths.

9. Bumper reinforcement (30) according to any one of claims 1 to 8, wherein the material bridge (43) extends on the plane of the mounting plate (40).

10. Bumper reinforcement (30) according to any one of claims 1 to 8, wherein the material bridge (43) extends in a direction perpendicular to the plane of the mounting plate (40).

11. Bumper reinforcement (30) according to claim 10, wherein a rear face (40b) of the mounting plate (40) is coplanar with a front face (30a) of the bumper reinforcement (30).

12. Bumper reinforcement (30) according to any one of the preceding claims, wherein said bumper reinforcement (30) is preferably formed by molding a material that is selected from among the following materials: polypropylene (PP), polyethylene (PE), polyamide (PA), polycarbonate (PC), polybutylene terephthalate (PC-PBT).

13. Bumper reinforcement (30) according to claim 12, wherein the material forming the bumper reinforcement (30) is preferably reinforced with mineral fillers or with glass or carbon fibers.

14. Bumper reinforcement (30) according to any one of the preceding claims, wherein the material bridge (43) is adjusted so that the mounting plate (40) detaches from said bumper reinforcement (30) when the vehicle is traveling at 15 km/h and undergoes a frontal crash against a stationary wall.

15. Bumper reinforcement (30) according to any preceding claim, wherein the material bridge (43) is adjusted so that the mounting plate (40) detaches from said bumper reinforcement (30) when the vehicle is traveling at 10 km/h and undergoes a frontal crash against a stationary post or a deformable barrier.

16. Bumper reinforcement (30) according to any one of the preceding claims, wherein a mounting plate (40) supports at least one sensor that is selected from among the following sensors (41): a lidar, a radar or a parking aid camera, a night vision camera, a distance regulation radar, a parking assistance proximity sensor.

17. Bumper reinforcement (30) according to any one of the preceding claims in which the mounting plate (40) supports one or more protective pins (44) that rise perpendicularly from the front face (40a) of the mounting plate (40) in the direction from the front of the vehicle to a height greater than the height of the nearest adjacent sensor (41).

18. Bumper reinforcement (30) according to any one of the preceding claims wherein said bumper reinforcement (30) is adapted to support air intake devices (32), a bumper skin (50), a guide air, an optical element, a battery charger, and/or an electronic control unit.

19. Bumper reinforcement (30) according to any one of the preceding claims that is overmolded on a structural part (20) comprising at least one of the following elements: an impact beam, a shock absorber, a pedestrian impact protection system (31).
